# DEMANDE DE BREVET EUROPEEN

(11) **EP 1 538 383 A1**
(43) Date de publication de la demande: **08.06.2005**
(21) Numéro de dépôt: 04356183.6
(22) Date de dépôt: 22.11.2004
(51) Int. Cl.: F16L 33/207

(54) **Raccord à sertir pour tubes multicouches**

(30) Priorité: 02.12.2003 FR 0314136
(71) Demandeur: COMAP, 69008 Lyon (FR)
(72) Inventeur: Le Clinche, Pascal, 69008 Lyon (FR)
(74) Mandataire: Maureau, Philippe

(57) **Abrégé**

Raccord à sertir (2) pour tubes multicouches (5) comportant une bague (24, 33) comprenant :
- une première partie annulaire (25) destinée à se loger entre la souche (3) et la douille de sertissage (18) du raccord (2) pour assurer une isolation galvanique entre une couche métallique (8) à l'extrémité du tube multicouche (5) et le rebord d'appui (6) de la souche (3), et
- au moins un segment (26) situé à l'extérieur de la douille de sertissage (18), relié à la partie annulaire (25) par au moins un pont de matière (27) passant par une ouverture (19) ménagée dans la douille (18),
le au moins un segment (26) permettant de positionner des mâchoires de sertissage (30) lors du sertissage et étant destiné à être séparé de la partie annulaire (25) lors du sertissage, l'au moins un pont de matière (27) étant rompu, afin de marquer le sertissage du raccord.

## Description

La présente invention concerne un raccord à sertir pour tubes multicouches.

Un tube de type multicouches est constitué de façon connue de trois couches de matériaux différents, la couche centrale étant métallique et les couches extérieures étant en matière synthétique.

Pour raccorder un premier tube à un second tube, il est connu d'utiliser un raccord à sertir. Ce raccord comprend une souche comportant deux embouts. Chaque tube est raccordé à un embout de la souche, l'étanchéité à l'intérieur de chaque tube étant assurée par un ou deux joints sur chaque embout de la souche. Le raccord comprend également deux bagues ou douilles de sertissages et deux bagues de positionnement, permettant de positionner les mâchoires de sertissage.

Lors de l'installation d'une portion de réseau de tubes, l'installateur réalise un assemblage comprenant notamment des tubes et des raccords avec plusieurs phases d'emboîtement d'un tube et d'un raccord, puis une phase de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis.

La création d'une fuite provoquée au niveau du raccord tant que celui-ci n'est pas serti a notamment été envisagée. Cette approche permet à l'opérateur de détecter les raccords non sertis en mettant l'installation sous pression, soit visuellement en repérant les fuites, soit en constatant une pression plus faible que la pression normale dans l'installation, ce qui permet une vérification globale du sertissage des raccords de l'installation. Ces fuites peuvent être provoquées par des joints de forme spécifiques, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 995 et WO 01/63160 décrivent deux dispositifs permettant de réaliser de telles fuites provoquées avant sertissage.

Il a également été envisagé d'utiliser des moyens de marquage présent sur chaque raccord sous forme de bague élastique comme décrit dans le document DE 299 07 585. Toutefois, ces bagues se montrent difficiles à détruire lors du sertissage.

De plus, l'utilisation de tubes multicouche avec une âme métallique impose des contraintes particulières pour le raccordement. Il faut notamment empêcher tout contact entre l'âme métallique qui apparaît au niveau de l'extrémité du tube et le corps métallique de la souche du raccord afin d'assurer l'isolation galvanique entre ces deux éléments métalliques. Si le contact s'établit, l'âme métallique du tube est progressivement détériorée.

Les problèmes techniques décrits ci-dessus sont résolus par la présente invention qui permet une vérification du sertissage par un moyen fiable et une isolation galvanique efficace.

La présente invention a pour objet un raccord à sertir pour tubes multicouches comportant :
- une souche comprenant au moins un embout destiné à être logé à l'intérieur d'un tube et un rebord d'appui de diamètre supérieur au tube, et
- une douille de sertissage de diamètre supérieur au tube et fixée par un de ses bords d'extrémité sur le rebord d'appui de la souche,
caractérisé en ce qu'il comprend de plus une bague comprenant :
- une première partie annulaire destinée à se loger entre la souche et la douille de sertissage pour assurer une isolation galvanique entre une couche métallique à l'extrémité du tube multicouche et le rebord d'appui de la souche, et
- au moins un segment situé à l'extérieur de la douille de sertissage, relié à la partie annulaire par au moins un pont de matière passant par une ouverture ménagée dans la douille,
   le au moins un segment permettant de positionner des mâchoires de sertissage lors du sertissage et étant destiné à être séparé de la partie annulaire lors du sertissage, l'au moins un pont de matière étant rompu, afin de marquer le sertissage du raccord.

Cette disposition permet à la fois d'assurer une isolation galvanique de façon simple et permet une visualisation aisée et fiable du sertissage par constatation de la présence ou l'absence des segments. Si ceux-ci sont absents, aucun élément de la bague n'est visible de l'extérieur, ce qui permet une différence visuelle marquante avec l'état précédent le sertissage. De plus, les ponts de matière constituent une zone de faiblesse garantissant la rupture de la bague.

Avantageusement, au moins une ouverture de la douille débouche sur un bord d'extrémité de la douille fixé au rebord d'appui de la souche.

Selon un mode de réalisation, la bague comporte aux moins deux segments, répartis de façon à ménager entre chaque paire de segments consécutifs un écart angulaire constant.

Avantageusement, chaque segment est relié à la partie annulaire par deux ponts de matière situés au deux extrémités du segment.

Selon un mode de réalisation, au moins une ouverture de la douille destinée au passage d'au moins un pont de matière comporte une partie non obstruée par un pont de matière permettant de visualiser l'enfoncement du tube sur l'embout de la souche.

Avantageusement, au moins une ouverture de la douille permet le passage de deux ponts de matière.

Selon un mode de réalisation, au moins une ouverture de la douille permet le passage de deux ponts de matière reliant deux segments distincts à la partie annulaire.

Avantageusement, chaque segment comporte un corps présentant, vu en coupe par un plan comprenant l'axe du raccord, un profil sensiblement complémentaire d'un logement ménagé dans une mâchoire de sertissage.

Selon un mode de réalisation, le corps du segment est fixée de façon excentré, vu en coupe par un plan comprenant l'axe du raccord, sur au moins un pont de matière, de façon à permettre un effet de levier exercé par la mâchoire de sertissage par rapport au point de fixation du pont de matière facilitant la cassure de celui-ci.

Selon une possibilité, une paroi parallèle à l'axe du raccord est ménagée sur le corps de segment, destinée à sortir du logement ménagé dans la mâchoire de sertissage afin d'augmenter l'effet de levier exercé par la mâchoire de sertissage par rapport au point de fixation d'un pont de matière.

Selon une autre possibilité, un rebord perpendiculaire à l'axe du raccord est ménagé, sur le corps de segment, sur le bord extérieur opposé au point de fixation d'un pont de matière, afin d'augmenter l'effet de levier exercé par une mâchoire de sertissage par rapport au point de fixation de ce pont de matière.

De toute façon, l'invention sera bien comprise à l'aide de la description qui suit, en référence au dessin schématique annexé, représentant à titre d'exemple non limitatif, plusieurs formes de réalisation d'un raccord selon l'invention.

La figure 1 est une vue en perspective d'une partie d'un premier raccord selon l'invention.

La figure 2 est une vue en coupe longitudinale du raccord de figure 1 en position entre des mâchoires de sertissage.

La figure 3 est une vue en perspective de la bague du raccord de figure 1.

La figure 4 est une vue en perspective d'une partie d'un second raccord selon l'invention.

La figure 5 est une vue en coupe longitudinale du raccord de figure 4 en position entre des mâchoires de sertissage.

La figure 6 est une vue en perspective de la bague du raccord de figure 4.

La figure 7 est une vue en perspective de la douille de sertissage des raccords de figure 1 et 4.

La figure 8 est une vue de coté d'une partie de la souche des raccords de figure 1 et 4.

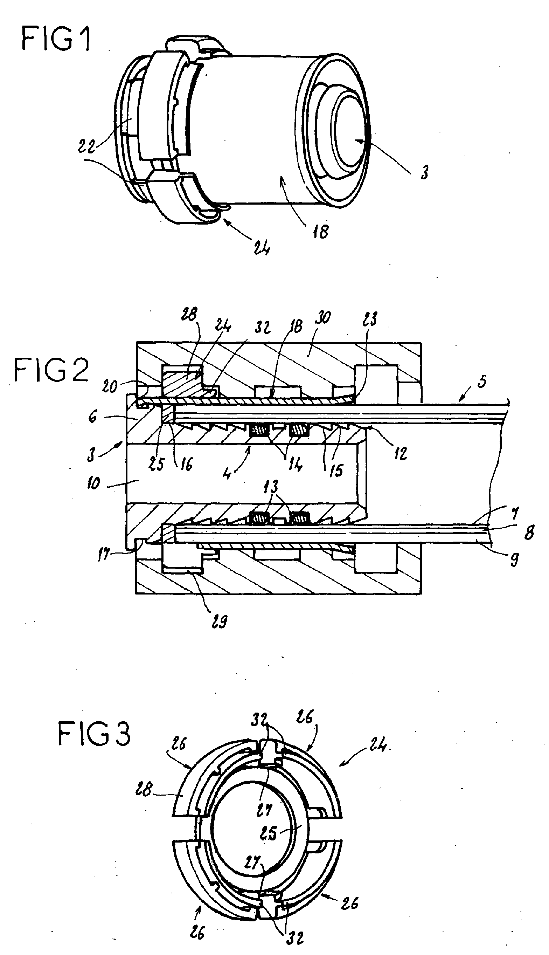

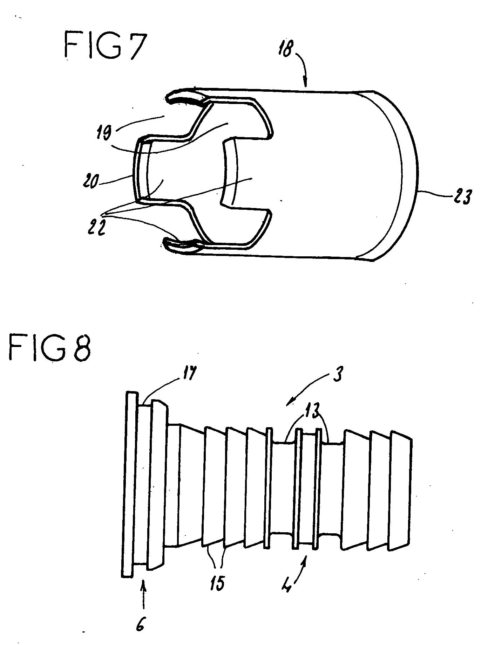

Selon un premier mode de réalisation représenté sur les figures 1 à 3 et 7 à 8, un raccord 2 comporte une souche 3 comprenant :
- au moins un embout 4 destiné à être logé dans un tube 5, et
- un rebord d'appui 6 destiné à rester hors du tube.

Le tube 5 comprend trois couches concentriques :
- une première couche 7 intérieure en matière synthétique, pouvant être du polyéthylène réticulé,
- une seconde couche 8 métallique, pouvant être de l'aluminium,
- une troisième couche 9 extérieure en matière synthétique, pouvant être du polyéthylène réticulé ou du polyéthylène haute densité.

Chaque tube comprend de plus deux couches d'adhésif non représentées situées de part et d'autre de la couche métallique 8.

L'embout 4, de diamètre extérieur sensiblement égal au diamètre intérieur du tube 5 comporte un passage interne 10 permettant l'écoulement d'un fluide contenu dans le tube et une paroi externe 12 dans laquelle sont ménagés :
- deux gorges 13 destinées à loger chacune un joint d'étanchéité 14, et
- plusieurs crans 15 en dent de sapin pour le maintien du tube 5.

Les crans 15 sont destinés à fournir un effet anti-retour empêchant la sortie de l'embout 4 du tube 5 en coopérant avec la paroi intérieure de ce tube.

A son extrémité la plus proche du rebord d'appui 6, l'embout comporte une zone annulaire cylindrique 16 sans crans 15.

Le rebord d'appui 6 est constitué par une partie annulaire de diamètre supérieur au diamètre du tube 5. Sur la paroi extérieure du rebord d'appui est ménagée une gorge d'attache 17.

Le raccord 2 comporte également une douille de sertissage 18, de forme générale cylindrique évidée, qui comporte des ouvertures 19 débouchant sur un bord d'attache 20 du cylindre de façon à former des créneaux 22.

Le bord 23 de la douille opposé au bord d'attache 22 est légèrement évasé de façon à faciliter l'introduction de l'extrémité du tube 5 entre la douille 18 et l'embout 4.

Le raccord 2 comporte d'autre part une bague 24 de visualisation et d'isolation galvanique.

La bague 24 comporte une première partie annulaire 25 destinée à se loger entre la souche 3 et la douille de sertissage 18 pour assurer l'isolation galvanique entre la couche métallique 8 à l'extrémité du tube 5 et la face en regard 6a du rebord d'appui 6 de la souche 3, et quatre segments 26 répartis régulièrement sur la circonférence de la bague et destinés à être disposés à l'extérieur de la douille de sertissage, chaque segment 26 étant relié à la partie annulaire 25 par deux ponts de matière 27 passant par deux ouvertures 19 ménagées dans la douille 18.

Les ponts de matière 27 sont disposés aux extrémités de chaque segment 26.

Lors du montage du raccord 2, la bague 24 est introduite sur l'embout 4 et disposée en appui axial contre le rebord d'appui 6, au niveau de la zone cylindrique 16.

La douille de sertissage 18 est ensuite assemblée, chaque créneau 22 passant dans un espace délimité par :
- un segment 26,
- les deux ponts de matière 27 reliant ce segment 26 avec la partie annulaire 25, et
- la partie annulaire 25,
puis le bord 20 d'attache formé par les créneaux 22 étant fixé sur la souche 3 au niveau du rebord d'appui 6, par clipsage dans la gorge d'attache 17, le diamètre interne de la douille 18 au niveau du bord d'attache 20, c'est-à-dire à l'extrémité des créneaux 22, étant inférieur au diamètre du bord de la gorge d'attache 17.

Ainsi, dans chaque ouverture 19 de la douille 18 passent deux ponts de matière 27 reliés à deux segments différents.

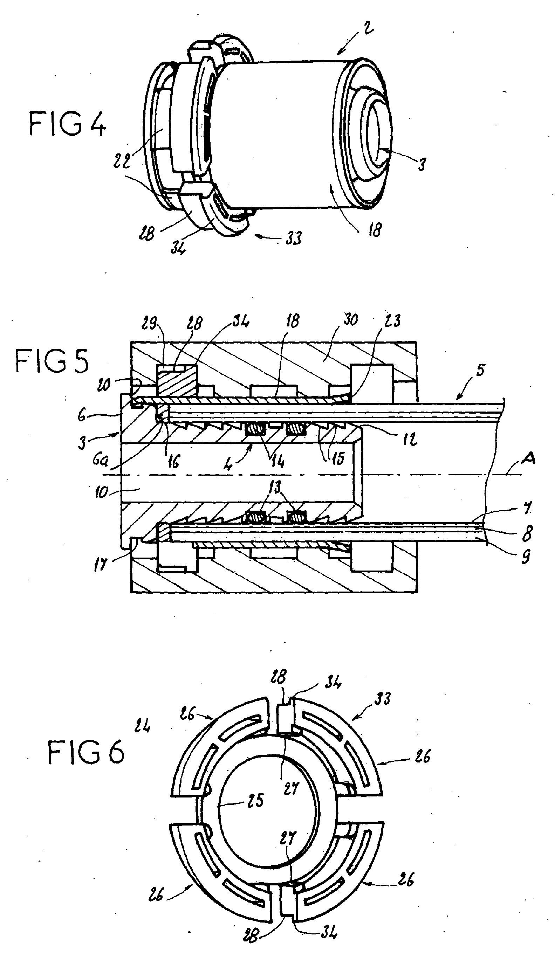

Comme cela est illustré sur la figure 4, chaque ouverture 19 est de taille suffisante pour ne pas être obstruée complètement par les ponts de matière 27 et par la partie annulaire 25 et permet, entre deux segments 26, de visualiser l'espace compris entre la douille 18 et l'embout 4 à proximité de la partie annulaire 25. Cette disposition permet de vérifier le bon enfoncement du tube 5 sur l'embout 4.

Chaque segment 26 comporte un corps 28 présentant, vu en coupe par un plan comprenant l'axe A du raccord, un profil sensiblement complémentaire d'un logement 29 ménagé dans la mâchoire de sertissage 30, cette complémentarité permettant de positionner la mâchoire.

Le corps 28 est fixé de façon excentrée, vu en coupe par un plan comprenant l'axe A du raccord, par rapport au ponts de matière 27, de façon à permettre un effet de levier exercé par la mâchoire de sertissage 30 par rapport au point de fixation du pont de matière 27 et de casser celui-ci.

Une paroi 32 parallèle à l'axe A du raccord est ménagé sur le corps 28, destinée à s'étendre à l'extérieur du logement 29 afin de subir la pression exercée la mâchoire de sertissage 30 de façon plus excentrée par rapport au point de fixation du pont de matière et d'augmenter ainsi l'effet de levier exercé par la mâchoire.

Les segments 26 sont donc présents avant sertissage et supprimés après sertissage, permettant ainsi de constater si le sertissage a été réalisé ou non.

Selon un second mode de réalisation représenté sur les figures 4 à 6, le raccord 2 comporte une souche 3 et une douille de sertissage 18 identiques aux mêmes éléments du premier mode de réalisation.

En revanche, le raccord 2 comporte une bague 33 de visualisation et d'isolation galvanique différente.

Cette bague 33 comporte comme dans le premier mode de réalisation une première partie annulaire 25 destinée à se loger entre la souche 3 et la douille de sertissage 18 pour assurer l'isolation galvanique entre la couche métallique 8 à l'extrémité du tube 5 et le rebord d'appui 6 de la souche, et quatre segments 26 répartis régulièrement sur la circonférence de la bague et destinés à être disposés à l'extérieur de la douille de sertissage, ces segments 26 étant reliés à la partie annulaire 25 par deux ponts de matière 27 passant par deux ouvertures 19 ménagées dans la douille 18.

Chaque segment 26 comporte un corps 28 présentant, vu en coupe par un plan comprenant l'axe du raccord, un profil sensiblement complémentaire d'un logement 29 ménagé dans la mâchoire de sertissage 30, cette complémentarité permettant de positionner la mâchoire.

Le corps 28 est fixé de façon excentrée, vu en coupe par un plan comprenant l'axe A du raccord, par rapport au ponts de matière 27, de façon à permettre un effet de levier exercé par la mâchoire de sertissage 30 par rapport au point de fixation du pont de matière 27 et de casser celui-ci.

Cependant, dans ce mode de réalisation, le corps ne comporte pas de paroi 32 comme dans le premier mode de réalisation.

Un rebord 34 perpendiculaire à l'axe A du raccord, de diamètre extérieur supérieur au diamètre du logement 29 de la mâchoire de sertissage 30, s'étend à partir du corps 28 d'un segment 26 sur le bord extérieur situé du côté opposé au point de fixation des ponts de matière 27. Ainsi, lors du sertissage, l'effort exercé par la mâchoire sur le rebord 34, provoque la rupture des ponts de matière 27.

Comme il va se soi, l'invention ne se limite pas à la forme de réalisation préférentielle décrite ci-dessus, à titre d'exemple non limitatif ; elle en embrasse au contraire toutes les variantes de réalisation dans le cadre des revendications ci-après.

## Revendications

1. Raccord à sertir (2) pour tubes multicouches (5) comportant :
- une souche (3) comprenant au moins un embout (4) destiné à être logé à l'intérieur d'un tube (5) et un rebord d'appui (6) de diamètre supérieur au tube (5), et
- une douille de sertissage (18) de diamètre supérieur au tube (5) et fixée par un de ses bords d'extrémité (20) sur le rebord d'appui (6) de la souche (3),
**caractérisé en ce qu'**il comprend de plus une bague (24, 33) comprenant :
- une première partie annulaire (25) destinée à se loger entre la souche (3) et la douille de sertissage (18) pour assurer une isolation galvanique entre une couche métallique (8) à l'extrémité du tube multicouche (5) et le rebord d'appui (6) de la souche (3), et
- au moins un segment (26) situé à l'extérieur de la douille de sertissage (18), relié à la partie annulaire (25) par au moins un pont de matière (27) passant par une ouverture (19) ménagée dans la douille (18),
le au moins un segment (26) permettant de positionner des mâchoires de sertissage (30) lors du sertissage et étant destiné à être séparé de la partie annulaire (25) lors du sertissage, l'au moins un pont de matière (27) étant rompu, afin de marquer le sertissage du raccord.

2. Raccord (2) selon la revendication 1, **caractérisé en ce qu'**au moins une ouverture (19) de la douille (18) débouche sur un bord d'extrémité (20) de la douille (18) fixé au rebord d'appui (6) de la souche (3).

3. Raccord (2) selon la revendication 2, **caractérisé en ce que** la bague (24, 33) comporte aux moins deux segments (26), répartis de façon à ménager entre chaque paire de segments consécutifs un écart angulaire constant.

4. Raccord (2) selon l'une des revendications 1 à 3, **caractérisé en ce que** chaque segment (26) est relié à la partie annulaire (25) par deux ponts de matière (27) situés au deux extrémités du segment.

5. Raccord (2) selon l'une des revendications 1 à 4, **caractérisé en ce qu'**au moins une ouverture (19) de la douille (18) destinée au passage d'au moins un pont de matière (27) comporte une partie non obstruée par un pont de matière (27) permettant de visualiser l'enfoncement du tube (5) sur l'embout (4) de la souche (3).

6. Raccord (2) selon l'une des revendications 1 à 5, **caractérisé en ce qu'**au moins une ouverture (19) de la douille (18) permet le passage de deux ponts de matière (27).

7. Raccord (2) selon la revendication 6, **caractérisé en ce qu'**au moins une ouverture (19) de la douille (18) permet le passage de deux ponts de matière (27) reliant deux segments (26) distincts à la partie annulaire (25).

8. Raccord (2) selon l'une des revendications 1 à 7 **caractérisé en ce que** chaque segment (26) comporte un corps (28) présentant, vu en coupe par un plan comprenant l'axe du raccord (A), un profil sensiblement complémentaire d'un logement (29) ménagé dans une mâchoire de sertissage (30).

9. Raccord (2) selon la revendication 8, caractérisé en ce le corps (28) du segment (26) est fixée de façon excentré, vu en coupe par un plan comprenant l'axe du raccord (A), sur au moins un pont de matière (27), de façon à permettre un effet de levier exercé par la mâchoire de sertissage (30) par rapport au point de fixation du pont de matière (27) facilitant la cassure de celui-ci.

10. Raccord (2) selon l'une des revendications 8 et 9, **caractérisé en ce qu'**une paroi (32) parallèle à l'axe du raccord (A) est ménagée sur le corps (28) de segment (26), destinée à sortir du logement (29) ménagé dans la mâchoire de sertissage (30) afin d'augmenter l'effet de levier exercé par la mâchoire de sertissage (30) par rapport au point de fixation d'un pont de matière (27).

11. Raccord (2) selon l'une des revendications 8 à 10, **caractérisé en ce qu'**un rebord (34) perpendiculaire à l'axe (A) du raccord, de diamètre extérieur supérieur au diamètre du logement (29) de la mâchoire de sertissage (30), s'étend à partir du corps (28) d'un segment (26), sur le bord extérieur situé du côté opposé au point de fixation de ce pont de matière (27).
